(19) Europäisches Patentamt
European Patent Office
Office européen des brevets

(11) **EP 2 310 112 B1**

(12) **EUROPÄISCHE PATENTSCHRIFT**

(45) Veröffentlichungstag und Bekanntmachung des Hinweises auf die Patenterteilung:
**18.04.2018   Patentblatt 2018/16**

(21) Anmeldenummer: **09777351.9**

(22) Anmeldetag: **22.07.2009**

(51) Int Cl.:
**B01D 53/94** *(2006.01)*       **F01N 3/20** *(2006.01)*
**F01N 9/00** *(2006.01)*

(86) Internationale Anmeldenummer:
**PCT/EP2009/005304**

(87) Internationale Veröffentlichungsnummer:
**WO 2010/015326 (11.02.2010 Gazette 2010/06)**

(54) **VERFAHREN ZUM BETREIBEN EINER ABGASREINIGUNGSANLAGE MIT EINEM SCR-KATALYSATOR**

METHOD FOR OPERATING AN EXHAUST GAS TREATMENT SYSTEM HAVING AN SCR CATALYTIC CONVERTER

PROCÉDÉ DE FONCTIONNEMENT D'UN SYSTÈME DE TRAITEMENT DES GAZ D'ÉCHAPPEMENT COMPORTANT UN CATALYSEUR RCS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.08.2008   DE 102008036885**

(43) Veröffentlichungstag der Anmeldung:
**20.04.2011   Patentblatt 2011/16**

(73) Patentinhaber: **Daimler AG**
**70327 Stuttgart (DE)**

(72) Erfinder:
• **CHRISTNER, Bernd**
**72584 Hülben (DE)**
• **PAULE, Markus**
**71404 Korb (DE)**

(74) Vertreter: **JENSEN & SON**
**366-368 Old Street**
**London EC1V 9LT (GB)**

(56) Entgegenhaltungen:
| | |
|---|---|
| DE-A1- 10 347 132 | DE-A1-102006 041 676 |
| DE-A1-102007 016 478 | DE-A1-102008 002 327 |
| US-A1- 2009 000 279 | US-B1- 6 427 439 |

EP 2 310 112 B1

**Beschreibung**

Die Erfindung betrifft ein Verfahren zum Betreiben einer Abgasreinigungsanlage mit einem SCR-Katalysator zur Reinigung eines Abgases eines Kraftfahrzeug-Verbrennungsmotors, bei welchem ein Ammoniak enthaltendes Reduktionsmittel dem Abgas zudosiert wird und dem SCR-Katalysator ein entsprechend der Zudosierung mit $NH_3$ angereichertes Abgas zugeführt wird, wobei durch ein Rechenmodell ein Ammoniak-Füllstandswert für einen Füllstand von im SCR-Katalysator gespeichertem Ammoniak berechnet wird.

Zur katalytisch unterstützten Entfernung von Stickoxiden (NOx) aus Brennkraftmaschinenabgasen ist es bekannt, dem Abgas der Brennkraftmaschine wässerige Harnstofflösung als ein Ammoniak ($NH_3$) enthaltendes Reduktionsmittel zuzugeben. Im heißen Abgas wird durch Thermolyse und/oder Hydrolyse $NH_3$ als eigentliches selektives Reduktionsmittel in Bezug auf die NOx-Reduktion an einem so genannten SCR-Katalysator freigesetzt. Dabei ergibt sich das Problem, eine für die angestrebte Reinigungswirkung passende Zugaberate für das Reduktionsmittel zu ermitteln, wobei außerdem eine Überdosierung, die einen unerwünschten Schlupf von $NH_3$ zur Folge haben kann, vermieden werden sollte.

Zur Lösung dieser Probleme wird in der EP 1 348 477 A1 vorgeschlagen, eine Verbrauchsrate von im Katalysator gespeichertem $NH_3$ und eine NOx-Reinigungsrate zu ermitteln und in Abhängigkeit von diesen Größen im Zusammenhang mit einem Füllstand von im Katalysator gespeichertem $NH_3$ die Reduktionsmittelzugabe zu steuern.

Aus der Offenlegungsschrift EP 0 554 766 A1 ist ein Verfahren zur NOx-Minderung in Abgasen durch gesteuerte überstöchiometrische Zugabe von $NH_3$ bekannt, bei welchem stromauf eines Katalysators $NH_3$ so lange zudosiert wird, bis die im Katalysator gespeicherte $NH_3$-Menge einen oberen Schwellenwert erreicht hat. Das im Katalysator gespeicherte $NH_3$ wird durch Reaktion mit dem von der Brennkraftmaschine emittierten und dem Katalysator zugeführten NOx verbraucht, wodurch der Schadstoff NOx aus dem Abgas entfernt wird. Die $NH_3$-Zugabe wird wieder aufgenommen, wenn die im Katalysator gespeicherte $NH_3$-Menge einen unteren Schwellenwert erreicht hat. Das Dokument DE 10347132 A1 offenbart darüber hinaus ein Verfahren zur Minderung von Stickoxiden im Abgas von Verbrennungsmotoren bei dem zwischen einer Kennfeld basierten Steuerung und einer Füllstandsregelung umgeschaltet wird.

In diesen und weiteren bekannten, ähnlichen Verfahren erfolgt meist eine modellbasierte Verknüpfung von Messwerten und gespeicherten Kennwerten, beispielsweise für den SCR-Katalysator. Dabei werden eine $NH_3$-Zuführrate und eine modellierte Verbrauchsrate durch eine laufend durchgeführte Integration bilanziert und die Reduktionsmittel-Dosierrate so gewählt, dass ein angestrebter $NH_3$-Füllstand im Katalysator und damit ein angestrebter Katalysatorwirkungsgrad resultiert. Es hat sich jedoch gezeigt, dass sich dabei beispielsweise durch Parameterveränderungen bedingte Fehler im Laufe der Zeit summieren, so dass der modellierte $NH_3$-Füllstand des Katalysators zunehmend schlechter dem tatsächlichen Wert entspricht und Fehldosierungen in Form einer Unter- oder Überdosierung resultieren. Folge hiervon ist eine verminderte Reinigungswirkung oder ein erhöhter $NH_3$-Schlupf.

Aufgabe der Erfindung ist es, ein Verfahren zum Betreiben einer Abgasreinigungsanlage mit einem SCR-Katalysator anzugeben, welches einen weiter verbesserten Stickoxidumsatz ermöglicht.

Diese Aufgabe wird durch ein Verfahren mit den Merkmalen des Anspruchs 1 gelöst.

Bei dem erfindungsgemäßen Verfahren wird durch ein Rechenmodell einerseits ein $NH_3$-Füllstandswert für einen Füllstand von im SCR-Katalysator gespeichertem Ammoniak berechnet. Andererseits wird durch das Rechenmodell eine Modell-Dosierrate für die Zudosierung des Reduktionsmittels ins Abgas berechnet, mit der ein durch das Rechenmodell vorgegebener Soll-Füllstand von im SCR-Katalysator gespeichertem $NH_3$ oder ein durch das Rechenmodell vorgegebener Soll-Wirkungsgrad für einen NOx-Umsatz mit im SCR-Katalysator gespeichertem oder dem SCR-Katalysator zugeführtem $NH_3$ wenigstens annähernd erreicht werden. Eine Dosiereinheit wird dabei zur Abgabe des Reduktionsmittels mit einer dementsprechenden Dosierrate angesteuert.

Erfindungsgemäß ist vorgesehen, entweder eine modellbasierte Füllstandsregelung zur Erreichung des Soll-Füllstands oder eine modellbasierte Wirkungsgradsteuerung zur Erreichung des Soll-Wirkungsgrads durchzuführen. Eine Umschaltung von Füllstandsregelung auf Wirkungsgradsteuerung und umgekehrt wird in Abhängigkeit vorbestimmter Werte für eine vom Rechenmodell ermittelte aktuelle Füllkapazität für eine aktuell im SCR-Katalysator maximal speicherbare Ammoniak-Menge, und/oder für eine Temperatur des Abgases oder des SCR-Katalysators, und/oder für einen Massenstrom von in den SCR-Katalysator einströmendes Abgas, und/oder für einen Massenstrom von in den SCR-Katalysator einströmendes Stickoxid vorgenommen. Der Füllstand von im SCR-Katalysator gespeichertem $NH_3$ ist in weiten Betriebsbereichen maßgebend für den NOx-Umsatz des SCR-Katalysators. Durch die modellbasierte Füllstandsregelung kann daher in weiten Betriebsbereichen ein hoher Wirkungsgrad für den NOx-Umsatz des SCR-Katalysators wenigstens annähernd erreicht werden. Dabei trägt der Einsatz eines Rechenmodells der Tatsache Rechnung, dass der $NH_3$-Füllstand des SCR-Katalysators einer direkten Messung nicht oder nur ungenau und mit erheblichem Aufwand zugänglich ist. Dabei wird unter einer modellbasierten Füllstandsregelung ein Regelverfahren verstanden, bei welchem ein vom Rechenmodell ermittelter $NH_3$-Füllstand des SCR-Katalysators als Regelgröße unter Rückführung auf den ebenfalls vom Rechenmodell vorgegebenen Soll-Füllstand eingeregelt wird. Unter einem Wirkungsgrad des NOx-Umsatzes wird ein relativer NOx-Umsatz verstanden, der sich als Quotient von in einem Zeitintervall zu unschädlichen Bestandteilen umgesetzter NOx-Menge und im selben Zeitintervall in den SCR-Katalysator einströmender NOx-Menge ergibt.

Es hat sich jedoch gezeigt, dass in bestimmten Betriebsbereichen durch die modellbasierte Füllstandsregelung ein von $NH_3$-Schlupf freier NOx-Umsatz mit der gewünschten Genauigkeit bzw. im gewünschten Umfang schwierig zu realisieren ist. Durch das erfindungsgemäß vorgesehene Umschalten auf die modellbasierte Wirkungsgradsteuerung zur Erreichung des Soll-Wirkungsgrads wird diesem Problem begegnet. Unter einer modellbasierten Wirkungsgradsteuerung wird dabei eine Steuerung des Wirkungsgrads für den NOx-Umsatz des SCR-Katalysators verstanden, wobei der zu erreichende Soll-Wirkungsgrad vom Rechenmodell unter Verzicht auf die Rückführung eines ermittelten Ist-Wirkungsgrads gesteuert wenigstens annähernd eingestellt wird.

Als Umschaltkriterien von Füllstandsregelung auf Wirkungsgradsteuerung und umgekehrt dienen dabei vorbestimmte Werte für die aktuelle $NH_3$-Füllkapazität des SCR-Katalysators, und/oder für eine Temperatur des Abgases oder des SCR-Katalysators, und/oder für einen Massenstrom von in den SCR-Katalysator einströmendes Abgas, und/oder für einen Massenstrom von in den SCR-Katalysator einströmendes Stickoxid. Die jeweiligen Größen können indirekt durch das Rechenmodell aus Betriebsdaten des Verbrennungsmotors oder durch direkte Messung ermittelt werden. Durch die erfindungsgemäß vorgesehene Umschaltung zwischen Füllstandsregelung und Wirkungsgradsteuerung wird insgesamt auf vorteilhafte Weise ein von $NH_3$-Schlupf freier hoher NOx-Umsatz in sehr weiten Betriebsbereichsgrenzen und damit insgesamt ein sehr niedriger NOx-Ausstoß erreicht. Gemäß der Erfindung wird vom Rechenmodell ein Basiswirkungsgrad ermittelt, der wenigstens annähernd einem aktuell möglichen maximalen Wirkungsgrad für den NOx-Umsatz des SCR-Katalysators entspricht und bei aktiver Wirkungsgradsteuerung ein vorgebbarer Bruchteil des Basiswirkungsgrads als Soll-Wirkungsgrad vorgegeben. Vorzugsweise wird bei aktiver Wirkungsgradsteuerung auf einen lediglich geringfügig unter dem maximal möglichen Wirkungsgrad liegenden Soll-Wirkungsgrad gesteuert. Bevorzugt ist eine Steuerung auf einen Soll-Wirkungsgrad von etwa 95 % bis 70 % des vom Rechenmodell als maximal möglich ermittelten Wirkungsgrads. Auf diese Weise kann selbst unter Verzicht auf eine Regelung einerseits ein ausreichend hoher NOx-Umsatz erzielt werden, andererseits kann ein $NH_3$-Schlupf, der sich bei einem höheren Wirkungsgrad ergeben kann, mit hoher Sicherheit vermieden werden.

In weiterer Ausgestaltung der Erfindung wird bei aktiver Füllstandsregelung und/oder bei aktiver Wirkungsgradsteuerung eine Vorsteuerung der Dosierrate vorgenommen. Vom Rechenmodell wird ein Wert für die Dosierrate des Reduktionsmittels ermittelt, mit welcher sich der Soll-Füllstand bzw. der Soll-Wirkungsgrad entsprechend des hinterlegten Modells ergeben sollte. Dieser Wert dient als Vorsteuerwert, mit welcher die Dosiereinheit angesteuert wird. Im Falle der aktiven Füllstandsregelung müssen daher lediglich sich ergebende Abweichungen ausgeregelt werden. Damit ist das Führungsverhalten des Regelkreises verbessert. Im Falle der aktiven Wirkungsgradsteuerung wird bevorzugt der NOx-Gehalt im Abgas mittels eines NOx-Sensors ausgangsseitig des SCR-Katalysators erfasst und vom Rechenmodell verglichen, ob der gemessene NOx-Gehalt mit dem sich aus dem Soll-Wirkungsgrad ergebenden NOx-Gehalt wenigstens annähernd übereinstimmt. Im Falle einer nicht tolerierten Abweichung wird die eingestellte Dosierrate entsprechend verändert.

In weiterer Ausgestaltung der Erfindung ist bei aktiver Füllstandsregelung und/oder bei aktiver Wirkungsgradsteuerung für die Modell-Dosierrate eine Korrektur durch einen veränderbaren Langzeitadaptionsfaktor zu einer Soll-Dosierrate vorgesehen und in einer noch weiteren Ausgestaltung der Erfindung ist bei aktiver Füllstandsregelung für den Ammoniak-Füllstandswert eine Korrektur durch einen veränderbaren Kurzzeitadaptionsfaktor zu einem angenommenen Ist-Füllstand vorgesehen. Somit ist erfindungsgemäß die Möglichkeit vorgesehen, eine direkt auf die Modell-Dosierrate einwirkende Korrektur vorzunehmen, welche zwar einerseits sofort wirksam wird, andererseits jedoch gegebenenfalls über längere Zeit erhalten bleibt. Zum anderen ist die Möglichkeit vorgesehen, eine vorwiegend kurzzeitig wirkende Korrektur des modellierten $NH_3$-Füllstandswerts vorzunehmen. Auf diese Weise können sowohl kurzzeitig auftretende Störeinflüsse, als auch über längere Zeit wirksame Störeinflüsse, beispielsweise allmählich fortschreitende Alterungs- oder Drifteffekte, kompensiert werden.

In weiterer Ausgestaltung der Erfindung werden laufend Stickoxid- und/oder Ammoniak-Emissionswerte des Abgases ermittelt und die Stickoxid- und/oder Ammoniak-Emissionswerte werden in Bezug auf das Erfüllen eines vorbestimmten Kurzzeitadaptionskriteriums und/oder eines Langzeitadaptionskriteriums zyklisch ausgewertet. Vorzugsweise werden die Stickoxid- und/oder Ammoniak-Emissionswerte des Abgases aus messtechnisch mittels eines geeigneten Abgassensors erfassten Werten ermittelt. Die Emissionswerte können jedoch auch Betriebskennfeldern entnommen sein. Auf diese Weise ist eine direkte Kontrolle der Füllstandsregelung bzw. Wirkungsgradsteuerung in Bezug auf ein korrektes Arbeiten ermöglicht. Eine im Anschluss an einen Zyklus gegebenenfalls zum angenommenen Ist-Füllstand korrigierter modellierter $NH_3$-Füllstandswert dient dann als aktueller Füllstandswert, auf den eine weitere bilanzierende Integration und Dosierung aufsetzt, um den Soll-Füllstand bzw. Soll-Wirkungsgrad zu erreichen. Dies ist gleichbedeutend mit einer Kurzzeitadaption des $NH_3$-Füllstandswerts, mit welcher zeitnah auf Kurzfristeinflüsse reagiert wird, welche gegebenenfalls zu einer Fehlmodellierung des $NH_3$-Füllstands führen. Hingegen wirkt eine gegebenenfalls vorgenommene Korrektur der Modell-Dosierrate durch insbesondere Multiplikation mit dem Langzeitadaptionsfaktor über einen Zyklus hinaus, was gleichbedeutend mit einer Langzeitadaption ist. Durch die erfindungsgemäße Vorgehensweise mit zyklisch vorgenommener Überprüfung modellierter Betriebsgrößen ist eine zyklische Anpassung dieser Betriebsgrößen ermöglicht, falls dies erforderlich ist.

In einer weiteren Ausgestaltung der Erfindung wird messtechnisch ein Wert für eine Ammoniakemission ($NH_3$-Emission) ausgangsseitig des SCR-Katalysators ermittelt und für den Fall, dass dieser Wert einen vom Rechenmodell ermittelten korrespondierenden Schätzwert um ein vorgebbares Maß überschreitet, wird die Modell-Dosierrate durch Multiplikation mit dem Langzeitadaptionsfaktor derart korrigiert, dass eine gegenüber der Modell-Dosierrate erniedrigte Soll-Dosierrate erhalten wird.

In einer weiteren Ausgestaltung der Erfindung wird messtechnisch ein Wert für eine Stickoxidemission ausgangsseitig des SCR-Katalysators ermittelt und für den Fall, dass dieser Wert einen vom Rechenmodell ermittelten korrespondierenden Schätzwert um ein vorgebbares Maß überschreitet, wird die Modell-Dosierrate durch Multiplikation mit dem Langzeitadaptionsfaktor derart korrigiert, dass eine gegenüber der Modell-Dosierrate erhöhte Soll-Dosierrate erhalten wird.

In einer weiteren vorteilhaften Ausgestaltung der Erfindung Ausführung wird messtechnisch ein Wert für eine Stickoxidemission ausgangsseitig des SCR-Katalysators ermittelt und für den Fall, dass dieser Wert einen vom Rechenmodell ermittelten korrespondierenden Schätzwert um ein vorgebbares Maß unterschreitet, wird ein vom Rechenmodell berechneter Ammoniak-Füllstandswert derart durch Multiplikation mit dem Kurzzeitadaptionsfaktor korrigiert, dass ein gegenüber dem berechneten Ammoniak-Füllstandswert erhöhter Ammoniak-Ist-Füllstandswert erhalten wird, mit welchen die weiteren Berechnungen des Rechenmodells durchgeführt werden.

In einer weiteren Ausgestaltung der Erfindung wird für die messtechnische Ermittlung von Stickoxid- und Ammoniak-Emissionswerten ausgangsseitig des SCR-Katalysators ein zugleich gegenüber Ammoniak und Stickoxid empfindlicher Abgassensor eingesetzt.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:

Fig. 1    ein schematisches Blockbild eines Kraftfahrzeug-Verbrennungsmotors mit einer angeschlossenen Abgasreinigungsanlage,

Fig. 2    ein Diagramm zur Verdeutlichung der $NH_3$-Speicherfähigkeit eines SCR-Katalysators,

Fig. 3    ein Diagramm zur Verdeutlichung der Temperaturabhängigkeit der $NH_3$-Speicherfähigkeit,

Fig. 4    ein Diagramm zur Verdeutlichung der Abhängigkeit von Stickoxidumsatz und $NH_3$-Schlupf vom $NH_3$-Füllstand eines SCR-Katalysators und

Fig. 5    eine schematische Blockbilddarstellung zur Verdeutlichung einer bevorzugten Vorgehensweise zur Ermittlung des $NH_3$-Füllstand des SCR-Katalysators der Abgasreinigungsanlage und

Fig. 6    eine bevorzugte Ausführungsform einer Struktur zur Durchführung der Füllstandsregelung,

Fig. 7    ein Diagramm mit beispielhaften Zeitverläufen von aufintegrierten Emissionswerten, die zur Ermittlung eines Adaptionskennwerts herangezogen werden,

Fig. 8    eine bevorzugte Struktur zur Anforderung eines Wechsels zwischen Füllstandsregelung und Wirkungsgradsteuerung und

Fig. 9    eine bevorzugte Struktur eines Wirkungsgrad-Berechnungsblocks zur Festlegung eines Soll-Wirkungsgrads bei Durchführung einer Wirkungsgradsteuerung.

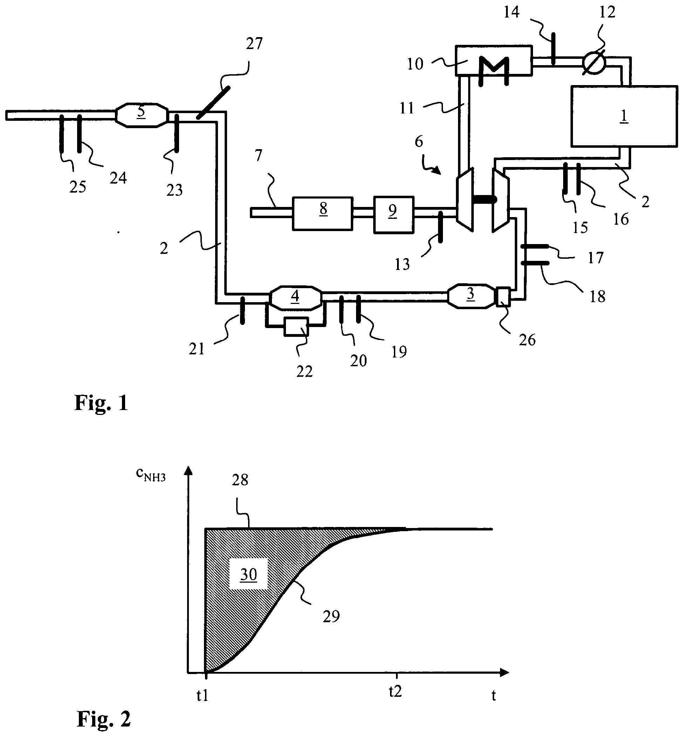

Fig. 1 zeigt beispielhaft ein schematisches Blockbild eines Verbrennungsmotors 1 eines nicht dargestellten Kraftfahrzeugs mit zugehöriger Abgasreinigungsanlage. Der Verbrennungsmotor 1 ist vorzugsweise als luftverdichtende Brennkraftmaschine, nachfolgend vereinfacht als Dieselmotor bezeichnet, ausgebildet. Das vom Dieselmotor 1 ausgestoßene Abgas wird von einer Abgasleitung 2 aufgenommen und durchströmt nacheinander einen Oxidationskatalysator 3, einen Partikelfilter 4 und einen NOx-Reduktionskatalysator 5. Oxidationskatalysator 3 und Partikelfilter 4 können auch eng benachbart in einem gemeinsamen Gehäuse angeordnet sein. Der Partikelfilter 4 ist vorzugsweise mit einer einen Rußabbrand und/oder eine NO-Oxidation fördernden katalytischen Beschichtung versehen.

Zur Beheizung des Oxidationskatalysators 3 bzw. des Abgases kann wie dargestellt eine Heizeinrichtung 26 eingangsseitig des Oxidationskatalysators 3 in der Abgasleitung 2 angeordnet sein. Die Heizeinrichtung 26 kann als elektrisches Heizelement oder auch als ein Wärme liefernder Reformer oder Vorverbrenner ausgebildet sein. Eine Aufheizung des Abgases kommt insbesondere bei einer Regeneration des Partikelfilters 4 durch Rußabbrand in Betracht. Zur Feststellung der Notwendigkeit einer solchen Regeneration ist dem Partikelfilter 4 ein Differenzdrucksensor 22 zugeordnet, welcher ein bezüglich einer Partikelbeladung auswertbares Signal liefert. Ferner ist ein Abgasturbolader 6 vorgesehen, dessen Turbine vom Abgasstrom angetrieben wird und dessen Verdichter über eine Ansaugluftleitung 7 angesaugte Luft über eine Luftzufuhrleitung 11 dem Dieselmotor 1 zuführt. Der Abgasturbolader 6 ist vorzugsweise als so genannter VTG-Lader mit einer variablen Einstellung seiner Turbinenschaufeln ausgebildet.

Zur Einstellung der dem Dieselmotor 1 zugeführten Luftmenge ist in der Luftzufuhrleitung 11 eine Drosselklappe 12 angeordnet. Zur Reinigung der Ansaugluft bzw. zur Messung der Ansaugluftmenge sind ein Luftfilter 8 bzw. ein Luftmassenmesser 9 in der Ansaugluftleitung 7 angeordnet. Ein in der Luftzufuhrleitung angeordneter Ladeluftkühler 10 dient zur Kühlung der verdichteten Ansaugluft. Weiterhin ist eine nicht dargestellte, über ein Abgasrückführventil einstellbare Abgasrückführung vorgesehen, mit welcher eine vorgebbare Menge rückgeführten Abgases der Ansaugluft zugegeben werden kann.

Stromauf des NOx-Reduktionskatalysators 5 ist eine Zugabestelle mit einer Dosiereinheit 27 zur Zugabe eines Reduktionsmittels in das Abgas angeordnet. Die Versorgung der Dosiereinheit 27 mit dem Reduktionsmittel erfolgt aus einem hier nicht dargestellten Behälter. Nachfolgend wird davon ausgegangen, dass es sich bei dem Reduktionsmittel um wässrige Harnstofflösung handelt, die dem Abgas über die Dosiereinheit 27 dosiert zugegeben wird. Im heißen Abgas wird durch Thermolyse und/oder Hydrolyse $NH_3$ freigesetzt, welches selektiv bezüglich der Reduktion von im Abgas enthaltenem NOx wirkt. Dementsprechend ist vorliegend der NOx-Reduktionskatalysators 5 als klassischer SCR-Katalysator auf $V_2O_5/WO_3$-Basis oder als Zeolith-beschichteter, geträgerter SCR-Katalysator ausgebildet. Das erfindungsgemäße Verfahren ist jedoch auch zur Dosierung anderer Reduktionsmittel in freier oder gebundener Form mit Vorteil anwendbar. Insbesondere bei Einsatz von wässriger Harnstofflösung als Reduktionsmittel kann zwischen der Dosiereinheit 27 und dem NOx-Reduktionskatalysator 5 eine nicht dargestellte Mischeinheit in der Abgasleitung 2 angeordnet sein, mit welcher durch die Dosiereinheit 27 bereits bevorzugt fein verteilt ins Abgas gesprühtes Reduktionsmittel mit Abgas zu einer möglichst homogenen Mischung vermischt wird. Dadurch können eine Tröpfchenverdampfung und die Freisetzung von $NH_3$ gefördert werden.

Zur Steuerung des Betriebs der Abgasreinigungsanlage sowie des Dieselmotors 1 ist eine in Fig. 1 nicht dargestellte Steuereinheit vorgesehen, die Informationen über Betriebszustandsgrößen des Dieselmotors 1 und der Abgasreinigungsanlage erhält. Informationen über Motorbetriebsgrößen können z.B. ein abgegebenes Drehmoment oder eine Drehzahl betreffen. Die Steuereinheit umfasst vorzugsweise eine Recheneinheit und eine Speichereinheit sowie eine Ein-Ausgabeeinheit. Dadurch ist die Steuereinheit in der Lage, komplexe Signalverarbeitungsvorgänge vorzunehmen und den Betrieb des Dieselmotors 1 sowie der Abgasreinigungsanlage zu erfassen und zu steuern bzw. zu regeln. Hierfür notwendige Kennfelder sind vorzugsweise in der Speichereinrichtung abgelegt, wobei auch eine adaptive Anpassung der Kennfelder vorgesehen sein kann. Die Kennfelder betreffen hauptsächlich die maßgeblichen Zustandsgrößen des Abgases, wie Massenstrom, Rohemission, Temperatur in Abhängigkeit der Betriebszustandsgrößen des Dieselmotors 1 wie Last, Drehzahl, Luftverhältniszahl etc. Ferner sind Kennfelder für die maßgeblichen Zustandsgrößen des Oxidationskatalysators 3, des Partikelfilters 4 und des SCR-Katalysators 5 vorgesehen. Hinsichtlich des SCR-Katalysators 5 betreffen diese Kennfelder insbesondere den NOx-Umsatz bzw. den Wirkungsgrad in Bezug auf den Stickoxid-Umsatz und die $NH_3$-Speicherfähigkeit in Abhängigkeit von den hierfür maßgebenden Einflussgrößen.

Die Erfassung von Betriebszuständen des Dieselmotors 1 sowie der Abgasreinigungsanlage und der zugeordneten Einheiten erfolgt vorzugsweise wenigstens teilweise mittels geeigneter Sensoren. Beispielhaft sind in Fig. 1 Drucksensoren 13 und 15 für einen Druck vor dem Verdichter und einen Druck vor der Turbine des Turboladers 6 sowie Temperatursensoren 14, 16, 18, 19, 21, 23 und 24 für jeweils eine Temperatur nach dem Ladeluftkühler 10, vor der Turbine, vor dem Oxidationskatalysator 3, vor und nach dem Partikelfilter 4 sowie vor und nach dem SCR-Katalysator 5 dargestellt. Weitere Sensoren, insbesondere zur Erfassung von Abgaskomponenten können ebenfalls vorgesehen sein. Beispielsweise sind ein Lambdasensor 17 sowie Sensoren 20 und 25 für den Stickoxid- und/oder $NH_3$-Gehalt im Abgas vorgesehen. Die Signale der Sensoren werden von der Steuereinheit verarbeitet, so dass die wesentlichen Zustandsgrößen jederzeit vorliegen und der Betriebspunkt des Dieselmotors 1 falls notwendig so verändert werden kann, dass ein optimaler bzw. gewünschter Betrieb der Abgasreinigungsanlage ermöglicht ist.

Nachfolgend werden mit Bezug auf die Fig. 2 bis Fig. 4 beispielhaft verschiedene Kenngrößen eines typischen, in der Abgasreinigungsanlage des Dieselmotors 1 eingesetzten SCR-Katalysators 5 erläutert. Dabei ist in Fig. 2 ein Diagramm zur Erläuterung der $NH_3$-Füllkapazität dargestellt.

Das Diagramm der Fig. 2 stellt einen typischen zeitlichen Verlauf $c_{NH3}(t)$ von $NH_3$-Konzentrationen $c_{NH3}$ bei einer Beaufschlagung des SCR-Katalysators 5 mit $NH_3$ dar. Dabei wird davon ausgegangen, dass ein von eingespeichertem $NH_3$ freier SCR-Katalysator 5 unter isothermen Bedingungen ab dem Zeitpunkt t1 mit einem Abgaseingangsstrom vorgegebener und zeitlich konstanter Größe und $NH_3$-Eingangskonzentration beaufschlagt wird, was durch die Spur 28 wiedergegeben ist. Entsprechend seiner $NH_3$-Speicherfähigkeit nimmt im Zeitbereich zwischen t1 und t2 der SCR-Katalysator 5 in zeitlich abnehmendem Maße $NH_3$ auf. Dem entsprechend bleibt die $NH_3$-Konzentration in dem den SCR-Katalysator 5 verlassenden Abgasstrom hinter der Eingangskonzentration zurück, was durch die Spur 29 wiedergegeben ist. Zum Zeitpunkt t2 ist der SCR-Katalysator 5 gesättigt, weshalb er kein weiteres $NH_3$ mehr speichern kann und die Spur 29 in die Spur 28 einmündet. Der $NH_3$-Füllstand hat dann seinen Maximalwert erreicht. Die dabei vom SCR-Katalysator 5 gespeicherte $NH_3$-Menge, welche die $NH_3$-Füllkapazität bzw. $NH_3$-Speicherfähigkeit unter den entsprechenden Bedingungen darstellt, wird durch die Größe der Fläche 30 zwischen den beiden Spuren 28, 29 repräsentiert.

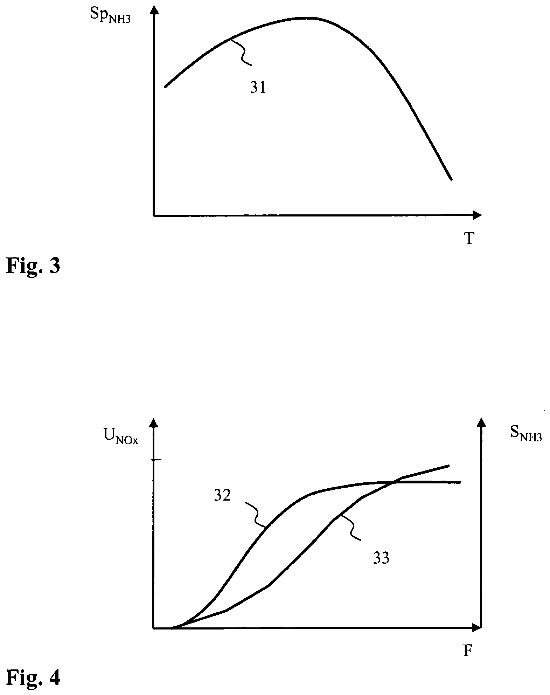

Die NH$_3$-Füllkapazität ist in erster Linie temperaturabhängig, was durch das in Fig. 3 dargestellte Diagramm wiedergegeben ist. Dabei stellt die Spur 31 einen typischen Verlauf der temperaturabhängigen NH$_3$-Füllkapazität Sp$_{NH3}$ (T) dar. Die NH$_3$-Füllkapazität Sp$_{NH3}$ (T) ist, wie dem Diagramm der Fig. 3 zu entnehmen ist, bei niedrigen Temperaturen T vergleichsweise groß und nimmt bei hohen Temperaturen T, etwa oberhalb 300 °C ab. Außerdem besteht eine Abhängigkeit vom Gasdurchsatz, was nicht näher dargestellt ist.

Der NH$_3$-Füllstand des SCR-Katalysators 5 kann absolut als gespeicherte NH$_3$-Menge oder als Bruchteil der unter den jeweiligen Bedingungen maximal speicherbaren NH$_3$-Menge, d.h. der NH$_3$-Füllkapazität Sp$_{NH3}$ angegeben werden.

Ein wichtiger Aspekt im Zusammenhang mit den Eigenschaften des SCR-Katalysators 5 betrifft die Abhängigkeit des NOx-Umsatzes vom NH$_3$-Füllstand. In Fig. 4 ist durch die Spur 32 diese Abhängigkeit schematisch dargestellt. Im Vergleich hierzu ist durch die Spur 33 die Abhängigkeit des NH$_3$-Schlupfes S$_{NH3}$ vom NH$_3$-Füllstand wiedergegeben. Mit zunehmendem NH$_3$-Füllstand F steigt dabei der NOx-Umsatz U$_{NOx}$ (F) mit flacher werdender Steigung kontinuierlich bis zu einem Maximalwert an, der im wesentlichen vom Gasdurchsatz und von der Temperatur bestimmt ist. Dies bedeutet, dass ab einem bestimmten Wert für den NH$_3$-Füllstand F der NOx-Umsatz U$_{NOx}$ durch eine weitere Einspeicherung von NH$_3$ im Katalysator nicht mehr gesteigert werden kann. Vielmehr erhöht sich, wie durch die Spur 33 dargestellt, der NH$_3$-Schlupf S$_{NH3}$. Bei der Einstellung eines für die jeweiligen Bedingungen optimalen Werts für den NH$_3$-Füllstand F ist die Berücksichtigung dieser Tatbestände von Bedeutung.

Die in den Figuren 2 bis 4 schematisch dargestellten Abhängigkeiten werden zweckmäßigerweise für den eingesetzten SCR-Katalysator 5 vorab ermittelt und als Kennlinien bzw. Kennfelder abgelegt. Auf diese kann die Steuereinheit zugreifen, so dass der Zustand des SCR-Katalysators 5 für jeden Betriebszustand umfassend ermittelbar ist.

Kern der Erfindung ist eine Festlegung einer Dosierrate für die Harnstofflösung derart, dass ein möglichst hoher, zumindest jedoch ein den Anforderungen entsprechender NOx-Umsatz durch den SCR-Katalysator 5 ermöglicht ist. In Abhängigkeit vorbestimmter Werte für bestimmte Betriebsgrößen insbesondere der Abgasreinigungsanlage wird entweder eine modellbasierte Füllstandsregelung des NH$_3$-Füllstands des SCR-Katalysators 5 oder eine modellbasierte Wirkungsgradsteuerung seines Wirkungsgrads in Bezug auf den NOx-Umsatz durchgeführt. Zur Realisierung der modellbasierten Füllstandsregelung bzw. Wirkungsgradsteuerung ist ein Rechenmodell vorgesehen, welches bevorzugt als Programm in der Steuereinheit gespeichert ist. Nachfolgend wird auf wesentliche Bestandteile des Rechenmodells eingegangen.

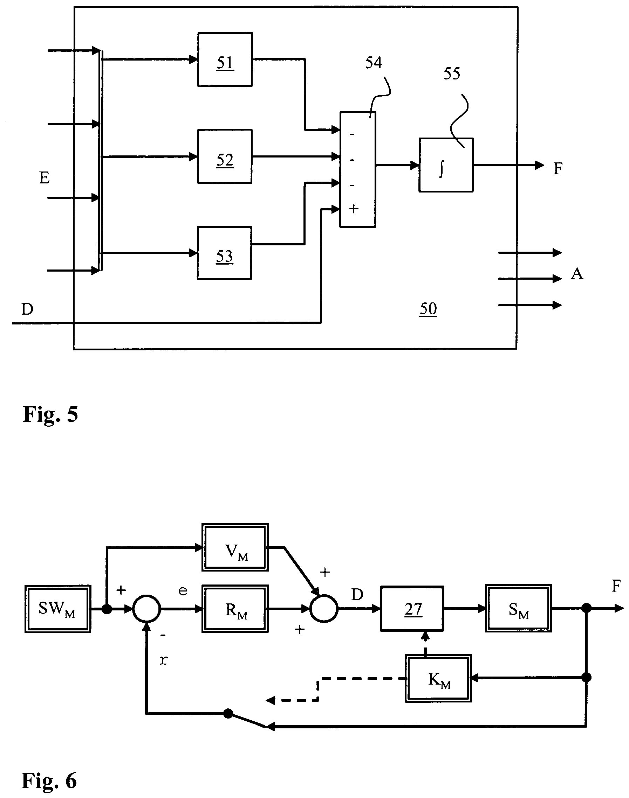

Ein wesentlicher Bestandteil des Rechenmodells ist ein in Fig. 5 schematisch dargestellter Füllstands-Berechnungsblock 50 zur Ermittlung des NH$_3$-Füllstands des SCR-Katalysators 5. Dem Füllstands-Berechnungsblock 50 werden verschiedene Eingabegrößen E zugeführt, welche Abgaszustandsgrößen wie die Abgastemperatur, Abgasmassenstrom und den NOx-Gehalt des in den SCR-Katalysator 5 einströmenden Abgases betreffen. Letzterer kann messtechnisch oder aus hinterlegten Motorbetriebskennfeldern ermittelt sein. Die Eingabegrößen E können gegebenenfalls weitere Größen umfassen.

Der Füllstands-Berechnungsblock 50 kann auf in Fig. 5 exemplarisch mit 51, 52, 53 bezeichnete Kennfeldsätze insbesondere betreffend einen NH$_3$-Verlust bzw. -Verbrauch von im SCR-Katalysator 5 gespeichertem und/oder ihm zugeführtem NH$_3$ zugreifen. Diese Kennfeldsätze 51, 52, 53 betreffen beispielsweise den NOx-Umsatz U$_{NOx}$, eine Direktumsetzung mit Sauerstoff und eine Desorptionsrate. Eine Berücksichtigung von Reduktionsmittelverlusten durch Wandablagerung in der Abgasleitung 2, unvollständiger Aufbereitung und dergleichen kann vorgesehen sein. Dabei werden die maßgeblichen Daten entsprechend den vorliegenden Eingabegrößen E bestimmt. Die Werte betreffend den NH$_3$-Verlust werden zusammen mit einer Modell-Dosierrate D einem Summationsabschnitt 54 zugeführt, welches die betreffenden Größen vorzeichenrichtig summiert. Auf diese Weise ist eine Bilanzierung für die Größen ermöglicht, welche die im SCR-Katalysator 5 gespeicherte NH$_3$-Menge im Wesentlichen bestimmen. Der von Summationsabschnitt 54 ermittelte Summenwert wird einem Integrationsabschnitt 55 zugeführt, dessen Ausgangsgröße ein NH$_3$-Füllstandswert F ist, der den aktuellen NH$_3$-Füllstand des SCR-Katalysators 5 repräsentiert. Daneben werden aus den vorliegenden Daten weitere Ausgangsgrößen A ermittelt. Dies sind beispielsweise modellierte Werte für den NOx-Gehalt des aus dem SCR-Katalysator 5 ausströmenden Abgases und den NH$_3$-Schlupf S$_{NH3}$.

Als weiteren Berechnungsblock umfasst das Rechenmodell einen Wirkungsgrad-Berechnungsblock, der einen von einer oder mehreren der Eingangsgrößen E und/oder der Ausgangsgrößen A abhängigen Soll-Wirkungsgrad $\eta$ für einen NOx-Umsatz U$_{NOx}$ mit im SCR-Katalysator 5 gespeichertem und/oder zugeführtem NH$_3$ ermittelt. Im Wirkungsgrad-Berechnungsblock ist bevorzugt ein Einfluss einer gegebenenfalls vorhandenen Passivierung des SCR-Katalysators 5 berücksichtigt. Eine solche Passivierung kann insbesondere durch dem SCR-Katalysator 5 zugeführte und auf katalytisch aktiven Zentren adsorbierte Kohlenwasserstoffe (HC) verursacht sein. Zur Berücksichtigung einer Passivierung durch adsorbierte Kohlenwasserstoffe wird bevorzugt auf ein Motorkennfeld betreffend eine HC-Emission des Dieselmotors 1, ein Kennfeld betreffend einen HC-Umsatz von Oxidationskatalysator 3 und/oder Partikelfilter 4 sowie HC-Adsorptions- und Desorptionskennlinien des SCR-Katalysators 5 zurückgegriffen. Auf eine bevorzugte Ausführungsform des Wirkungsgrad-Berechnungsblocks wird weiter unten genauer eingegangen.

Vom Rechenmodell wird wie bereits angesprochen, entweder eine modellbasierte Füllstandsregelung oder eine Wirkungsgradsteuerung durchgeführt. Nachfolgend wird unter Bezug auf Fig. 6 zunächst auf eine bevorzugte Umsetzung der modellbasierten Füllstandsregelung zur Erreichung des Soll-Füllstands von im SCR-Katalysator (5) gespeichertem Ammoniak eingegangen.

In Fig. 6 ist eine bevorzugte Reglerstruktur, welche vom Rechenmodell emuliert wird, als schematisches Blockmodell dargestellt. Dabei sind vom Rechenmodell dargestellte Funktionsblöcke durch doppelte Umrahmung und mit einem Bezugszeichen mit tiefgestelltem "M" gekennzeichnet. Insbesondere werden vom Rechenmodell ein Sollwertgeber $SW_M$, ein Vorsteuerblock $V_M$, ein Regler $R_M$, eine Regelstrecke $S_M$ sowie ein Korrekturblock $K_M$ modelliert bzw. emuliert. Die Regelstrecke $S_M$ wird dabei im Wesentlichen durch den SCR-Katalysator 5 repräsentiert, wobei im Re-chenmodell weitere auf den $NH_3$-Füllstand des SCR-Katalysators 5 einwirkende Einflussgrößen berücksichtigt sein können, wie vorstehend bereits bei Beschreibung des Füllstands-Berechnungsblocks 50 erläutert.

Vom Sollwertgeber $SW_M$ wird abgeleitet aus gemessenen oder Kennfeldern entnommenen Betriebsgrößen der Abgasreinigungsanlage und des Dieselmotors 1 ein Sollwert für den $NH_3$-Füllstand (Soll-Füllstand) des SCR-Katalysators 5 generiert, mit welchem sich rechnerisch ein vorgebbarer anzustrebender NOx-Gehalt im Abgas ausgangsseitig des SCR-Katalysators 5 oder ein vorgebbarer Wirkungsgrad des SCR-Katalysators 5 ergeben würde. Der Soll-Füllstand dient als Führungsgröße des Regelkreises und wird einerseits an den Vorsteuerblock $V_M$ weitergegeben, andererseits wird durch Subtraktion eines Rückführwerts r eine Regelabweichung e gebildet, welche dem Regler $R_M$ zugeführt wird. Ein vom Vorsteuerblock gelieferter Vorsteuerwert und ein Ausgang des Reglers $R_M$ werden zur Modell-Dosierrate D verknüpft, die als Hilfsstellgröße der Dosiereinheit 27 zugeführt wird und diese zur bevorzugt pulsweitenmodulierbar getakteten Abgabe von Harnstofflösung ins Abgas veranlasst. Die entsprechende Dosierrate stellt eine Stellgröße y des Regelkreises dar, die auf die Regelstrecke $S_M$ einwirkt und zu einem modellierten $NH_3$-Füllstandswert F als Regelgröße führt.

In einer bevorzugten Ausführung berechnet sich bei modellbasierter Füllstandsregelung der Vorsteuerwert für die Dosierrate aus der zur Reduktion der aktuellen NOx-Rohemission des Dieselmotors 1 erforderlichen Reduktionsmittelmenge, die mit einem Faktor multipliziert wird, der den modellierten Wirkungsgrad bzw. NOx-Umsatz des SCR-Katalysators 5 entsprechend den aktuellen Bedingungen berücksichtigt. Auf diese Weise kann eine Überdosierung mit hoher Sicherheit vermieden werden.

Obschon mit der durch das Rechenmodell emulierten modellbasierten Füllstandsregelung entsprechend den obigen Erläuterungen weitgehend zuverlässig ein hoher NOx-Umsatz $U_{NOx}$ des SCR-Katalysators 5 erzielbar ist, ist gegebenenfalls ein korrigierender Eingriff über den Korrekturblock $K_M$ vorgesehen. Der Eingriff des Korrekturblocks $K_M$ kann, wie durch die gestrichelt dargestellten Wirkungspfeile angedeutet, einerseits korrigierend auf die Modell-Dosierrate D und andererseits korrigierend auf den $NH_3$-Füllstandswert F wirken, worauf nachfolgend näher eingegangen wird.

Die erfindungsgemäß vorgesehene Korrektur durch Adaption beruht auf einer messtechnischen Kontrolle von hinter dem SCR-Katalysator 5 vorhandenen Reinemissionswerten des Abgases. Werden beispielsweise durch den Abgassensor 25 unerwünschte Abweichungen vom modellierten angestrebten Ergebnis in Bezug auf die Schadstoffe NOx oder $NH_3$ festgestellt, so wird eine adaptive Korrektur von Modell-Dosierrate D und/oder $NH_3$-Füllstandswert F vorgenommen. Dabei kann eine messtechnische Ermittlung der $NH_3$-Emission und der NOx-Emission ausgangsseitig des SCR-Katalysators 5 mit getrennten, jeweils lediglich für $NH_3$ bzw. NOx empfindlichen Abgassensoren 25 vorgesehen sein.

Überschreitet ein messtechnisch ermittelter Wert für eine $NH_3$-Emission ausgangsseitig des SCR-Katalysators 5 einen korrespondierenden, vom Rechenmodell ermittelten Schätzwert um ein vorgebbares Maß, so zeigt dies eine vom Rechenmodell fälschlich zu hoch errechnete Modell-Dosierrate D an. In diesem Fall wird bevorzugt die Modell-Dosierrate D durch Multiplikation mit einem Langzeitadaptionsfaktor derart korrigiert, dass eine gegenüber der Modell-Dosierrate D erniedrigte Soll-Dosierrate erhalten wird, mit welcher die Dosiereinheit 27 zur Abgabe des Reduktionsmittels angesteuert wird. Überschreitet hingegen ein messtechnisch ermittelter Wert für eine NOx-Emission ausgangsseitig des SCR-Katalysators 5 einen korrespondierenden, vom Rechenmodell ermittelten Schätzwert um ein vorgebbares Maß, so zeigt dies eine vom Rechenmodell fälschlich zu niedrig errechnete Modell-Dosierrate D an. In diesem Fall wird bevorzugt die Modell-Dosierrate D durch Multiplikation mit dem Langzeitadaptionsfaktor derart korrigiert, dass eine gegenüber der Modell-Dosierrate D erhöhte Soll-Dosierrate erhalten wird, mit welcher die Dosiereinheit 27 zur Abgabe des Reduktionsmittels angesteuert wird. Dabei ist bevorzugt vorgesehen, von vornherein eine Multiplikation der Modell-Dosierrate D mit dem Langzeitzeitadaptionsfaktor vorzusehen und im Falle einer notwendigen Korrektur den Langzeitadaptionsfaktor um eine vorgebbare Schrittweite zu erniedrigen bzw. zu erhöhen. Bei einer ersten Inbetriebnahme der Abgasreinigungsanlage ist bevorzugt der Langzeitadaptionsfaktor mit dem Wert 1,0 vorbelegt.

Erfindungsgemäß ist zudem für den Fall, dass ein messtechnisch ermittelter Wert für eine NOx-Emission ausgangsseitig des SCR-Katalysators 5 einen korrespondierenden, vom Rechenmodell ermittelten Schätzwert um ein vorgebbares Maß unterschreitet, eine Korrektur des vom Rechenmodell ermittelten $NH_3$-Füllstandswerts F vorzuneh-men.

Vorgesehen ist eine Multiplikation des $NH_3$-Füllstandswerts F mit einem Kurzzeitadaptions-faktor derart, dass ein gegenüber dem $NH_3$-Füllstandswert F erhöhter angenommener $NH_3$-Ist-Füllstand erhalten wird, mit welcher die

weiteren Berechnungen des Rechenmodells durchgeführt werden. Das Ausmaß der Erhöhung bzw. der Betrag des Kurzzeitadaptionsfaktors wird dabei bevorzugt in Abhängigkeit vom Ausmaß der festgestellten Abweichung vorgebbar festgelegt.

Vorzugsweise ist es vorgesehen, zur Ermittlung von Abweichungen der messtechnisch ermittelten Emissionswerte von den vom Rechenmodell ermittelten Werten laufend Integrationen über aufeinander folgende Integrationszyklen vorgebbarer Länge vorzunehmen und die erhaltenen Summenwerte zu vergleichen. Bevorzugt wird aus den Summenwerten ein quantitativer Adaptionskennwert ermittelt, der zyklisch auf das Erfüllen eines vorbestimmten Kurzzeit- und/oder Langzeitadaptionskriteriums ausgewertet wird. Nachfolgend wird diese Vorgehensweise eingehender für den Fall erläutert, dass ein sowohl gegenüber NOx als auch gleichzeitig gegenüber $NH_3$ empfindlicher Abgassensor 25 verwendet wird. Durch Einsatz eines derart ausgebildeten Abgassensors 25 kann ein Sensor eingespart werden, wobei jedoch besonderes Augenmerk auf die richtige Interpretation des Sensorsignals gelegt werden muss. Durch die nachfolgend erläuterte bevorzugte Vorgehensweise werden Fehlinterpretationen vermieden.

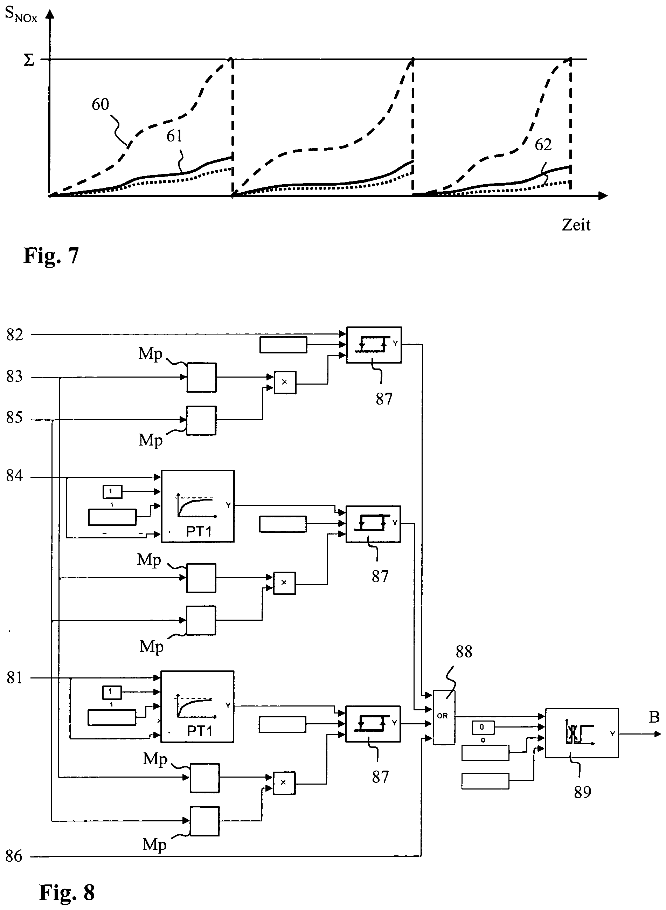

Zur Erläuterung der bevorzugten Vorgehensweise zur Ermittlung des für die Durchführung einer Langzeit- oder Kurzzeitadaption maßgebenden Adaptionskennwerts wird zunächst Bezug auf Fig. 7 genommen. Darin sind beispielhaft in drei aufeinander folgenden Integrationszyklen erhaltene Verläufe $S_{NOX}$ von aufintegrierten NOx-Emissionswerten dargestellt. Eine mit der Kennziffer 60 gekennzeichnete Spur gibt dabei den aufintegrierten Verlauf der in den SCR-Katalysator 5 einströmenden NOx-Menge wieder. Entsprechend korrespondiert Spur 61 mit einer messtechnisch mittels des gegenüber $NH_3$ und NOx empfindlichen Abgassensors 25 ermittelten ausströmenden NOx-Menge. Spur 62 gibt die korrespondierende, durch das Rechenmodell errechnete bzw. geschätzte ausströmende NOx-Menge wieder.

Die Länge eines jeweiligen Integrationszyklus kann durch eine vorgebbare feste Zeitspanne bestimmt sein. Vorliegend ist die Länge eines Integrationszyklus jedoch an das Erreichen eines vorgebbaren Summenwerts $\Sigma$ für die in den SCR-Katalysator 5 einströmende aufintegrierte NOx-Menge gemäß Spur 60, nachfolgend als NOx-Rohemissionswert $NOx_{in}$ bezeichnet, geknüpft. Je nach Art des Dieselmotors 1 wird der Summenwert $\Sigma$ in einem bevorzugten Bereich von 0,1 g NOx bis 1,0 g NOx, berechnet als NO, vorgegeben. Der im Integrationszyklus mit der solcherart festgelegten Länge erhaltene integrale NOx-Emissionswert für die gemessene NOx-Menge ausgangsseitig des SCR-Katalysators 5 (Spur 61) wird nachfolgend als NOx-Reinemissions-Messwert $NOx_{outmes}$ bezeichnet. Analog wird der vom Rechenmodell errechnete integrale Wert (Spur 62) am Integrationszyklusende als NOx-Reinemissions-Schätzwert $NOx_{outcalc}$ bezeichnet.

Der zur Durchführung einer Langzeit- und/oder Kurzzeitadaption maßgebende Adaptionskennwert K wird nun bevorzugt durch die Beziehung

$$K = (NOx_{outmes} - NOx_{outcalc}) : NOx_{in}$$

ermittelt. Für eine weitere Auswertung ist es bevorzugt, einen Mittelwert für den Adaptionskennwert K für mehrere aufeinander folgende Integrationszyklen zu ermitteln. Dadurch wird eine verbesserte statistische Sicherheit erzielt.

Zur Auswertung des Adaptionskennwerts K in Bezug auf das Vorliegen des für eine vorzunehmende Langzeit- oder Kurzzeitadaption maßgebenden Langzeit- oder Kurzzeitadaptionskriteriums wird geprüft, ob der Adaptionskennwert K oberhalb eines vorgebbaren oberen Schwellenwerts bzw. unterhalb eines vorgebbaren unteren Schwellenwertes liegt. Liegt der Adaptionskennwert innerhalb eines Bereichs zwischen oberem und unterem Schwellenwert, so wird davon ausgegangen, dass das Rechenmodell zufrieden stellend arbeitet und es wird mit der zyklischen Ermittlung von Adaptionskennwerten fortgefahren, ohne dass eine Adaption vorgenommen wird.

Liegt der Adaptionskennwert K unterhalb des unteren Schwellenwertes von beispielsweise -0,04, so ist der Reinemissions-Messwert $NOx_{outmes}$ um ein als unzulässig definiertes Maß kleiner als aufgrund der Modellierung zu erwarten war. Es wird in diesem Fall davon ausgegangen, dass der tatsächliche $NH_3$-Füllstand des SCR-Katalysators 5 eine kritische Höhe erreicht hat, bzw. den vom Rechenmodell ermittelten $NH_3$-Füllstandswert F unzulässig übersteigt und das Kurzzeitadaptionskriterium wird als erfüllt angesehen. Es wird in diesem Fall eine Kurzzeitadaption dadurch vorgenommen, dass der vom Rechenmodell ermittelte $NH_3$-Füllstandswert F durch Multiplikation mit einem Kurzzeitadaptionsfaktor > 1,0 erhöht wird. Die Größe des Kurzzeitadaptionsfaktors wird dabei bevorzugt aus einem Kennfeld oder einer Kennlinie für eine Abhängigkeit von NOx-Umsatz und $NH_3$-Füllstand analog dem in Fig. 4 dargestellten Diagramm derart ermittelt, dass der zum angenommenen Ist-Füllstand korrigierte $NH_3$-Füllstandswert F zum NOx-Reinemissions-Messwert $NOx_{outmes}$ passt. Vorzugsweise nach Ablauf einer vorgebbaren Sperrzeit, in welcher Einschwingvorgänge abklingen können, wird mit der weiteren zyklischen Ermittlung bzw. Auswertung von Adaptionskennwerten K fortgefahren. Bei der weiteren Berechnung geht das Rechenmodell zur Berechnung der Modell-Dosierrate D von einem entsprechend der Korrektur gegenüber dem zunächst ermittelten $NH_3$-Füllstandswert F korrigierten höheren angenommenen Ist-Füllstand aus.

Werden innerhalb einer vorgebbaren Zeitspanne von beispielsweise 5 min bis 60 min mehr als eine vorgebbare Anzahl von Kurzzeitadaptionen erforderlich, so wird von einer andauernden Überdosierung ausgegangen und es erfolgt bevorzugt eine Langzeitadaption derart, dass die vom Rechenmodell ermittelte Modell-Dosierrate D mit einem um eine vorgebbare Schrittweite verringerten Langzeitadaptionsfaktor multipliziert wird.

Ergibt die Auswertung des Adaptionskennwertes K, dass dieser oberhalb des oberen Schwellenwertes von beispielsweise 0,1 liegt, so wurde vom Abgassensor 25 eine im Vergleich zu den Berechnungen des Rechenmodells unzulässig erhöhte Reinemission gemessen. Damit wird das Langzeitadaptionskriterium als erfüllt angesehen und es ist eine Veränderung des Langzeitadaptionsfaktors vorgesehen. Im Fall eines sowohl gegenüber NOx als auch $NH_3$ empfindlichen Abgassensors 25 ist jedoch zunächst im direkten Anschluss an die Ermittlung des oberhalb des oberen Schwellenwertes liegenden Adaptionskennwertes K eine Entscheidungsprozedur vorgesehen. In dieser wird entschieden, ob das vom Abgassensor 25 gelieferte Signal als auf NOx oder als auf $NH_3$ beruhend anzusehen ist. Nachfolgend wird die Entscheidungsprozedur näher erläutert.

Als erster Schritt der Entscheidungsprozedur wird die Dosiereinheit 27 zur Abgabe eines Dosierimpulses mit einer kurzzeitig und impulsähnlich über das normale Maß hinaus erhöhten Dosierrate des Reduktionsmittels angesteuert. Der Dosierimpuls ist bevorzugt in der Art eines DT1-Glieds ausgebildet. Dabei wird die Amplitude des DT1-Dosierimpulses bevorzugt entsprechend einer $NH_3$-Dosierrate im Bereich von 5 mg $NH_3$/s bis 20 mg $NH_3$/s gewählt. Als Zeitkonstante wird eine Abklingzeit des DT1-Dosierimpulses von vorzugsweise 5 s bis 60 s gewählt. Dabei dient bevorzugt der Beginn des Dosierimpulses als Auslösetrigger für den Start eines Integrationszyklus zur Ermittlung des NOx-Rohemissionswertes $NOx_{in}$, des NOx-Reinemissions-Messwertes $NOx_{outmes}$ und des NOx-Reinemissions-Schätzwertes $NOx_{outcalc}$, mit anschließender Berechnung des Adaptionskennwertes K entsprechend den vorstehenden Erläuterungen. Es ist dabei bevorzugt, den die Dauer des Integrationszyklus bestimmenden Summenwert $\Sigma$ gegenüber der normalen Einstellung herabzusetzen, damit der Adaptionskennwert K rascher zur Verfügung steht.

Wird infolge der kurzzeitig und impulsähnlich erhöhten Dosierrate nunmehr ein gegenüber dem vorherigen Wert verringerter Adaptionskennwert K, insbesondere ein nunmehr unterhalb des oberen Schwellenwertes liegender Adaptionskennwert K ermittelt, so deutet dies auf eine vor der Entscheidungsprozedur vorhandene Unterdosierung hin und der vom Abgassensor 25 gelieferte Messwert bzw. der NOx-Reinemissions-Messwert $NOx_{outmes}$ wird als tatsächlich auf NOx beruhend interpretiert. Als Reaktion auf diese Entscheidung wird der Langzeitadaptionsfaktor, mit welchem die Modell-Dosierrate D multipliziert wird, um eine vorgebbare Schrittweite erhöht und die Dosiereinheit 27 zur Abgabe der entsprechend zur Soll-Dosierrate korrigierten Modell-Dosierrate D angesteuert. Anschließend wird, bevorzugt nach einer vorgebbaren Sperrzeit, die fortlaufende Ermittlung von Adaptionskennwerten K wieder aufgenommen.

Wird im Anschluss an die kurzzeitig und impulsähnlich erhöhten Dosierrate nunmehr ein weiter erhöhter, über dem oberen Schwellenwert liegender Adaptionskennwert K ermittelt, so deutet dies auf eine vor der Entscheidungsprozedur vorhandene Überdosierung hin und der vom Abgassensor 25 gelieferte Messwert bzw. der NOx-Reinemissions-Messwert $NOx_{outmes}$ wird als auf $NH_3$ beruhend interpretiert. Als Reaktion auf diese Entscheidung wird der Langzeitadaptionsfaktor, mit welchem die Modell-Dosierrate D multipliziert wird, um eine vorgebbare Schrittweite verringert und die Dosiereinheit 27 zur Abgabe der entsprechend zur Soll-Dosierrate korrigierten Modell-Dosierrate D angesteuert. Anschließend wird, bevorzugt nach einer vorgebbaren Sperrzeit, die fortlaufende Ermittlung von Adaptionskennwerten wieder aufgenommen. Zusätzlich ist es vorzugsweise vorgesehen, insbesondere noch vor der Verringerung des Langzeitadaptionsfaktors, eine Abgasrückführrate für eine kurze, vorgebbare Zeitspanne zu verringern oder durch Schließen des Abgasrückführventils auf Null zu setzen. Auf diese Weise wird die NOx-Rohemission des Dieselmotors 1 kurzzeitig über den normalen Wert hinaus erhöht. Damit werden durch den Dosierimpuls dem SCR-Katalysator 5 zusätzlich zugeführtes $NH_3$ sowie ein erhöhter $NH_3$-Füllstand rasch abgebaut und einem unerwünscht hohen NH3-Schlupf vorgebeugt.

In einigen Betriebsbereichen können unerwünschte Ungenauigkeiten bei einer auf den $NH_3$-Füllstand abgestellten modellbasierten $NH_3$-Füllstandsregelung auftreten. Zur Lösung dieses Problems ist es erfindungsgemäß vorgesehen, unter vorbestimmten Bedingungen von der modellbasierten Füllstandsregelung auf eine Wirkungsgradsteuerung zur Erreichung eines vorgebbaren Soll-Wirkungsgrads $\eta$ des SCR-Katalysators 5 für den NOx-Umsatz $U_{NOx}$ umzuschalten. Umgekehrt ist vorgesehen, bei Wegfall der Bedingungen von der Wirkungsgradsteuerung wieder zur modellbasierten Füllstandsregelung zurückzuschalten. Nachfolgend wird unter Bezug auf Fig. 8 näher erläutert, unter welchen Bedingungen bevorzugt eine Umschaltung angefordert bzw. initiiert wird. Dabei wird lediglich auf die für ein Verständnis maßgebenden Zusammenhänge eingegangen und auf eine Erläuterung von weitergehenden Details der Einfachheit halber verzichtet.

In Fig. 8 ist als Strukturdiagramm eine Entscheidungs- und Auswerteprozedur zur Ermittlung eines für die Umschaltung zwischen modellbasierter Füllstandsregelung und modellbasierter Wirkungsgradsteuerung maßgebenden Umschaltkriteriums dargestellt. Vom Rechenmodell werden Werte 81 für einen aktuellen Massenstrom von in den SCR-Katalysator einströmendes Stickoxid (NOx-Rohemissionsmassenstrom), 82 für eine aktuelle Temperatur des Abgases oder des SCR-Katalysators 5, 84 für den aktuellen Massenstrom von in den SCR-Katalysator 5 einströmendes Abgas und 86 für weitere Betriebsgrößen, wie beispielsweise eine vom Rechenmodell ermittelte aktuelle Füllkapazität für eine aktuell im SCR-Katalysator 5 maximal speicherbare Ammoniak-Menge eingelesen. Dabei werden die Werte 81, 84 für den NOx-Rohemissionsmassenstrom und den Abgasmassenstrom einer Signalfilterung mittels eines PT1-Glieds PT1 mit einer Zeitkonstanten von typischerweise 10 s bis 200 s unterzogen. Dadurch wird eine Glättung erzielt und ein Einfluss kurzzeitig anliegender Signalspitzen minimiert. Ferner werden Werte 83, 85, welche eine Alterung und eine Passivierung des SCR-Katalysators 5 charakterisieren, eingelesen und daraus mittels Kennlinien Mp Korrekturfaktoren für die Temperatur, den gefilterten Abgasmassenstrom und den gefilterten NOx-Rohemissionsmassenstrom generiert. Durch diese Korrektur ist in vorteilhafter Weise eine Berücksichtigung von maßgebenden Eigenschaften des SCR-Katalysators 5 und damit der Regelstrecke $S_M$ gemäß Fig. 6 bei der Ermittlung des für eine Umschaltung maßgebenden Umschaltkriteriums ermöglicht. Die korrigierten und gegebenenfalls gefilterten Werte 81, 82, 84 für den NOx-Rohemissionsmassenstrom, den Abgasmassenstrom und die Temperatur werden einer Schwellwertanalyse 87 unterzogen. Dabei wird ein binäres Signal bei Überschreiten einer jeweiligen vorgebbaren oberen Hystereseschwelle auf wahr gesetzt und bei Unterschreiten einer unteren Hystereseschwelle auf falsch gesetzt. Obschon nicht dargestellt, kann in analoger Weise in Bezug auf Signalfilterung, Korrektur und Schwellwertanalyse eine Verarbeitung der weiteren Betriebsgrößen 86 vorgesehen sein. Typische Werte für die obere Hystereschwelle sind etwa 400 °C für die Temperatur, etwa 380 kg/h für den Abgasmassenstrom und 35 mg/s für den NOx-Rohemissionsmassenstrom.

Mittels einer Oder-Verknüpfung 88 wird ermittelt, ob wenigstens ein oberer Schwellenwert überschritten ist und in diesem Fall über eine Zeitentprellung 89 ein für eine Umschaltung maßgebendes binäres Anforderungssignal B zur Anforderung eines Umschaltens von Füllstandsregelung auf Wirkungsgradsteuerung auf wahr gesetzt. Sind alle unteren Schwellenwerte unterschritten, so wird das Anforderungssignal B auf falsch gesetzt. Dabei sorgt die Zeitentprellung 89 dafür, dass der Ausgang der Oder-Verknüpfung 88 eine vorgebbare Zeitspanne von beispielsweise fünf Sekunden vorliegen muss, um einen Wechsel des Anforderungssignals B und damit ein Umschalten bewirken zu können. Auf diese Weise ist die Entscheidungssicherheit verbessert und es werden nicht unbedingt erforderliche Umschaltungen vermieden. Der Ausgang der Oder-Verknüpfung 88 stellt somit das für die Umschaltung zwischen modellbasierter Füllstandsregelung und modellbasierter Wirkungsgradsteuerung maßgebende Umschaltkriterium dar.

Bei aktiver Wirkungsgradsteuerung wird die Regelung durch Unterbrechung der Rückführung des Regelkreises gemäß Fig. 6 beendet und vom Sollwertgeber $SW_M$ ein Soll-Wirkungsgrad η für einen Stickoxid-Umsatz $U_{NOx}$ mit im SCR-Katalysator 5 gespeichertem und/oder dem SCR-Katalysator 5 zugeführtem Ammoniak vorgegeben.

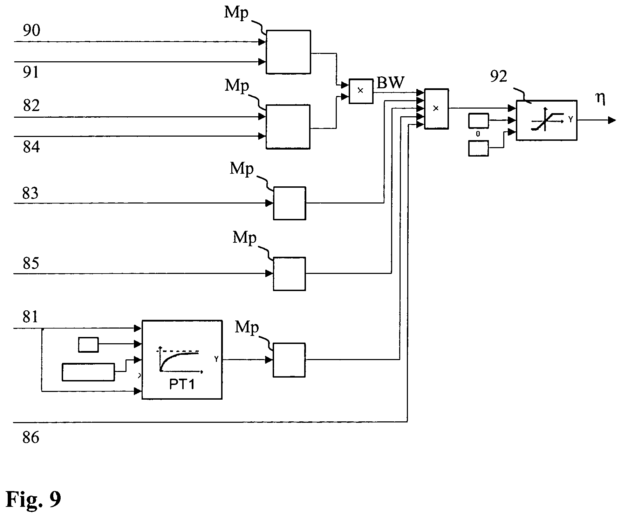

Nachfolgend wird unter Bezug auf ein in Fig. 9 dargestelltes Strukturdiagramm eine bevorzugte Ausgestaltung eines Wirkungsgrad-Berechnungsblocks des Rechenmodells zur Festlegung eines Werts für den Soll-Wirkungsgrad η erläutert. Dabei sind Betriebsgrößen, soweit sie denen von Fig. 8 entsprechen, dieselben Bezugszeichen zugeordnet.

Vom Rechenmodell werden neben Werten 82 für die aktuelle Temperatur des Abgases oder des SCR-Katalysators 5 und Werten 84 für den aktuellen Abgasmassenstrom Werte 90 und 91 für die Drehzahl und die Kraftstoffeinspritzmenge des Dieselmotors 1 eingelesen und aus weiteren zugeordneten Kennfeldern Mp wird ein Basiswirkungsgrad BW ermittelt, der wenigstens annähernd einem aktuell möglichen maximalen Wirkungsgrad für den NOx-Umsatz $U_{NOx}$ des SCR-Katalysators 5 entspricht. Ferner werden Werte 81, 83, 85, für den NOx-Rohemissionsmassenstrom, die Alterung und Passivierung des SCR-Katalysators 5 und daraus mittels Kennlinien Mp Korrekturfaktoren generiert, wobei wie dargestellt eine PT1-Signalfilterung des NOx-Rohemissionsmassenstroms vorgenommen wird. Durch multiplikative Verknüpfung mit dem Basiswirkungsgrad BW und unter Zwischenschaltung eines Begrenzers 92 wird ein gegenüber dem Basiswirkungsgrad BW entsprechend den vorgenommenen Korrekturen verminderter Soll-Wirkungsgrad η erhalten. Typischerweise beträgt der Soll-Wirkungsgrad η 70 % bis 95 % des aktuell maximal möglichen Wirkungsgrads.

Bei aktiver Wirkungsgradsteuerung gibt der Sollwertgeber $SW_M$ (s. Fig. 6) den Soll-Wirkungsgrad η an den Vorsteuerblock $V_M$ und den nun als Steuereinheit arbeitenden Regler $R_M$ weiter. Der Vorsteuerblock $V_M$ ermittelt unter Berücksichtigung der Stöchiometrie der chemischen Reduktionsreaktion von NOx mit $NH_3$ einen entsprechenden Vorsteuerwert für die von der Dosiereinheit 27 abzugebende Modell-Dosierrate D. Der Regler bzw. die Steuereinheit $R_M$ wird so betrieben, dass er den Vorsteuerwert allenfalls vermindern kann. Dadurch wird eine Erhöhung des gegenüber dem Betrieb mit Füllstandsregelung typischerweise verringerten Vorsteuerwerts verhindert. In einer bevorzugten Ausführung berechnet sich bei modellbasierter Wirkungsgradsteuerung der Vorsteuerwert für die Dosierrate aus der zur Reduktion der aktuellen NOx-Rohemission des Dieselmotors 1 erforderlichen Reduktionsmittelmenge, die mit einem Soll-Wirkungsgrad η multipliziert wird. Die Steuerung der Dosiereinheit 27 kann als reine Vorsteuerung erfolgen.

Bevorzugt ist auch bei aktiver Wirkungsgradsteuerung eine Korrektur der Modell-Dosierrate D zu einer durch einen Langzeitadaptionsfaktor korrigierten Soll-Dosierrate vorgesehen. Bei Einsatz eines sowohl gegenüber NOx als auch gleichzeitig gegenüber $NH_3$ empfindlichen Abgassensors 25 ist die Langzeitadaption in vorteilhafter Weise dadurch erleichtert, dass infolge des gegenüber dem maximal möglichen Wirkungsgrad verringerten Soll-Wirkungsgrad η der Betrieb des SCR-Katalysators 5 unter sicherer Vermeidung von $NH_3$-Schlupf erfolgt und damit das Signal des Abgassensors 25 als auf NOx beruhend zu interpretieren ist. Bei der auch bei Wirkungsgradsteuerung vorgesehenen Langzeitadaption kann daher auf die oben beschriebene Entscheidungsprozedur in Bezug auf die Interpretation des Signals des Abgassensors 25 verzichtet werden, wobei ansonsten analog zur oben für den Fall der Füllstandsregelung erläuterten Vorgehensweise vorgegangen kann.

Ergibt bei aktiver Wirkungsgradsteuerung die Auswertung des analog zur Füllstandsregelung ermittelten Adaptionskennwertes K, dass dieser oberhalb des oberen Schwellenwertes von beispielsweise 0,1 liegt, so wird das Langzeitadaptionskriterium als erfüllt angesehen, da vom Abgassensor 25 ein im Vergleich zu den Berechnungen des Rechenmodells unzulässig erhöhter NOx-Reinemissions-Messwert $NOx_{outmes}$ gemessen wurde, was auf eine entsprechend zu niedrig eingestellte Soll-Dosierrate schließen lässt. Als Reaktion darauf wird eine Erhöhung des Langzeitadaptionsfaktors K vorgenommen. Die Erhöhung des Langzeitadaptionsfaktors K wird dabei so festgelegt, dass sich mit einer entsprechend korrigierten Modell-Dosierrate D im zurückliegenden Integrationszyklus ein NOx-Reinemissions-Schätzwert $NOx_{outcalc}$, ergeben hätte, der einen Adaptionskennwert K von Null oder annähernd Null zu Folge gehabt hätte.

Ob eine Langzeitadaption durchgeführt werden soll, kann abweichend von der oben erläuterten Vorgehensweise auch durch eine modifizierte Ermittlung des Adaptionskennwerts K gemäß der Beziehung

$$K = f * (NOx_{in} - NOx_{outcalc}) : (NOx_{in} - NOx_{outmes})$$

bestimmt werden, wobei f einen Sicherheitsfaktor mit einem Wert von typischerweise kleiner eins darstellt, der bevorzugt in Abhängigkeit des NOx-Rohemissionswertes $NOx_{in}$ festgelegt wird. Bevorzugt wird ein Mittelwert aus mehreren, beispielsweise vier, hintereinander ermittelten Adaptionskennwerten K ermittelt. Wird eine vorgebbare Abweichung von eins festgestellt, so wird der Langzeitadaptionsfaktor um eine vorgebbare Schrittweite verändert.

Insgesamt ist somit mit der erfindungsgemäß betriebszustandsabhängig vorgesehenen Umschaltung von Füllstandsregelung auf Wirkungsgradsteuerung sichergestellt, dass in einem sehr weiten Betriebsbereich der Abgasreinigungsanlage eine optimale Dosierrate für das Reduktionsmittel und damit eine optimale Stickoxidverminderung erzielt wird.

Was den Umschaltvorgang von Füllstandsregelung auf Wirkungsgradsteuerung und umgekehrt betrifft, so ist ein gleitender Übergang zwischen den jeweiligen, typischerweise voneinander verschiedenen Vorsteuerwerten für die Dosierrate vorgesehen. Beim Übergang von Wirkungsgradsteuerung auf Füllstandsregelung wird der bei aktiver Wirkungsgradsteuerung ermittelte Langzeitadaptionsfaktor bevorzugt übernommen, wobei vorzugsweise eine Gewichtung mit einem vorgebbaren Gewichtungsfaktor vorgesehen ist. Analog ist bevorzugt vorgesehen, dass beim Übergang von Füllstandsregelung auf Wirkungsgradsteuerung der bei aktiver Füllstandsregelung wirksame Langzeitadaptionsfaktor mit einer Gewichtung übernommen wird. Dadurch werden unerwünschte Sprünge des Langzeitadaptionsfaktors bei einer Umschaltung der Betriebsarten und ein unerwünschtes Auseinanderdriften der jeweilig wirksamen Langzeitadaptionsfaktoren verhindert.

**Patentansprüche**

1. Verfahren zum Betreiben einer Abgasreinigungsanlage mit einem SCR-Katalysator (5) zur Reinigung eines Abgases eines Kraftfahrzeug-Verbrennungsmotors (1), bei welchem von einer durch eine Steuereinheit ansteuerbaren Dosiereinheit (27) ein Ammoniak enthaltendes Reduktionsmittel mit einer einstellbaren Dosierrate dem Abgas zudosiert wird und dem SCR-Katalysator (5) ein entsprechend der Zudosierung mit Ammoniak angereichertes Abgas zugeführt wird, wobei durch ein Rechenmodell berechnet werden

   - ein Ammoniak-Füllstandswert (F) für einen Füllstand von im SCR-Katalysator (5) gespeichertem Ammoniak und
   - eine Modell-Dosierrate (D) für die Zudosierung des Reduktionsmittels ins Abgas, mit der ein durch das Rechenmodell vorgegebener Soll-Füllstand von im SCR-Katalysator (5) gespeichertem Ammoniak oder ein durch das Rechenmodell vorgegebener Soll-Wirkungsgrad ($\eta$) für einen Stickoxid-Umsatz ($U_{NOx}$) mit im SCR-Katalysator (5) gespeichertem oder dem SCR-Katalysator (5) zugeführtem Ammoniak wenigstens annähernd erreicht werden,

   und entweder eine modellbasierte Füllstandsregelung zur Erreichung des Soll-Füllstands oder eine modellbasierte Wirkungsgradsteuerung zur Erreichung des Soll-Wirkungsgrads ($\eta$) durchgeführt wird, wobei bei aktiver Füllstandsregelung bei Überschreiten vorbestimmter Werte für

   - eine vom Rechenmodell ermittelte aktuelle Füllkapazität für eine aktuell im SCR-Katalysator maximal speicherbare Ammoniak-Menge, und/oder
   - eine Temperatur des Abgases oder des SCR-Katalysators (5), und/oder
   - einen Massenstrom von in den SCR-Katalysator (5) einströmendes Abgas, und/oder
   - einen Massenstrom von in den SCR-Katalysator (5) einströmendes Stickoxid auf eine Wirkungsgradsteuerung umgeschaltet wird,

wobei vom Rechenmodell ein Basiswirkungsgrad (BW) ermittelt wird, der wenigstens annähernd einem aktuell möglichen maximalen Wirkungsgrad für den NOx-Umsatz ($U_{NOx}$) des SCR-Katalysators (5) entspricht und bei aktiver Wirkungsgradsteuerung ein vorgebbarer Bruchteil des Basiswirkungsgrads (BW) als Soll-Wirkungsgrad ($\eta$) vorgegeben wird.

2. Verfahren nach Anspruch 1,
**dadurch gekennzeichnet, dass**
bei aktiver Füllstandsregelung und/oder bei aktiver Wirkungsgradsteuerung eine Vorsteuerung der Dosierrate vorgenommen wird.

3. Verfahren nach einem der Ansprüche 1 oder 2,
**dadurch gekennzeichnet, dass**
bei aktiver Füllstandsregelung und/oder bei aktiver Wirkungsgradsteuerung für die Modell-Dosierrate (D) eine Korrektur durch einen veränderbaren Langzeitadaptionsfaktor zu einer Soll-Dosierrate vorgesehen ist.

4. Verfahren nach einem der Ansprüche 1 bis 3,
**dadurch gekennzeichnet, dass**
bei aktiver Füllstandsregelung für den Ammoniak-Füllstandswert (F) eine Korrektur durch einen veränderbaren Kurzzeitadaptionsfaktor zu einem angenommenen Ist-Füllstand vorgesehen ist.

5. Verfahren nach Anspruch 3 oder 4,
**dadurch gekennzeichnet dass**
laufend Stickoxid- und/oder Ammoniak-Emissionswerte des Abgases ermittelt werden und die Stickoxid- und/oder Ammoniak-Emissionswerte in Bezug auf das Erfüllen eines vorbestimmten Kurzzeitadaptionskriteriums und/oder eines Langzeitadaptionskriteriums zyklisch ausgewertet werden.

6. Verfahren nach einem der Ansprüche 3 bis 5,
**dadurch gekennzeichnet dass**
messtechnisch ein Wert für eine Ammoniakemission ausgangsseitig des SCR-Katalysators (5) ermittelt wird und für den Fall, dass dieser Wert einen vom Rechenmodell ermittelten korrespondierenden Schätzwert um ein vorgebbares Maß überschreitet, die Modell-Dosierrate (D) durch Multiplikation mit dem Langzeitadaptionsfaktor derart korrigiert wird, dass eine gegenüber der Modell-Dosierrate (D) erniedrigte Soll-Dosierrate erhalten wird.

7. Verfahren nach einem der Ansprüche 3 bis 6,
**dadurch gekennzeichnet dass**
messtechnisch ein Wert für eine Stickoxidemission ausgangsseitig des SCR-Katalysators (5) ermittelt wird und für den Fall, dass dieser Wert einen vom Rechenmodell ermittelten korrespondierenden Schätzwert um ein vorgebbares Maß überschreitet, die Modell-Dosierrate (D) durch Multiplikation mit dem Langzeitadaptionsfaktor derart korrigiert wird, dass eine gegenüber der Modell-Dosierrate (D) erhöhte Soll-Dosierrate erhalten wird.

8. Verfahren nach einem der Ansprüche 3 bis 7,
**dadurch gekennzeichnet dass**
messtechnisch ein Wert für eine Stickoxidemission ausgangsseitig des SCR-Katalysators (5) ermittelt wird und für den Fall, dass dieser Wert einen vom Rechenmodell ermittelten korrespondierenden Schätzwert um ein vorgebbares Maß unterschreitet, ein vom Rechenmodell berechneter Ammoniak-Füllstandswert (F) derart durch Multiplikation mit dem Kurzzeitadaptionsfaktor korrigiert wird, dass ein gegenüber dem berechneten Ammoniak-Füllstandswert (F) erhöhter Ammoniak-Ist-Füllstandswert erhalten wird, mit welchen die weiteren Berechnungen des Rechenmodells durchgeführt werden.

9. Verfahren nach einem der Ansprüche 6 und 7 oder 8,
**dadurch gekennzeichnet dass**
zur messtechnischen Ermittlung von Stickoxid- und Ammoniak-Emissionswerten ausgangsseitig des SCR-Katalysators (5) ein zugleich gegenüber Ammoniak und Stickoxid empfindlicher Abgassensor (25) eingesetzt wird.

**Claims**

1. Method for operating an exhaust gas purification system having an SCR converter (5) for purifying an exhaust gas of a motor vehicle internal combustion engine, in which method a reducing agent containing ammonia is added to the exhaust gas by a metering unit (27) controllable by a control unit at an adjustable metering rate and an exhaust gas enriched with ammonia in accordance with the metering process is fed to the SCR converter (5), wherein the following is calculated by means of a calculation model:

   - an ammonia level value (F) for a level of ammonia stored in the SCR converter (5), and
   - a model metering rate (D) for the metering of the reducing agent into the exhaust gas, with which model metering rate (D) a target level of ammonia stored in the SCR converter (5) or a target efficiency for a nitrogen oxide conversion ($U_{NOx}$) predetermined by the calculation model with ammonia stored in the SCR converter (5) or fed to the SCR converter (5) is attained at least approximately,

   and wherein either a model-based level control is performed in order to reach the target level or a model-based efficiency control is performed in order to reach the target efficiency, wherein, if during active level control predetermined values for

   - a current level capacity determined by the calculation model for a currently maximum storable ammonia quantity in the SCR converter, and/or
   - a temperature of the exhaust gas or of the SCR converter (5) and/or
   - a mass flow of exhaust gas flowing into the SCR converter (5) and/or
   - a mass flow of nitrogen oxide flowing into the SCR converter (5) are exceeded, there is a switchover to efficiency control,

   wherein a base efficiency (BW), which at least approximately corresponds to a currently possible maximum efficiency for the NOx conversion ($U_{NOx}$) of the SCR converter (5), is determined by the calculation model and during active efficiency control a presettable fraction of the base efficiency (BW) is predetermined as target efficiency ($\eta$).

2. Method according to claim 1,
   **characterised in that**
   during active level control and/or during active efficiency control, a precontrol of the metering rate is performed.

3. Method according to claim 1 or 2,
   **characterised in that**
   during active level control and/or during active efficiency control, a correction is provided for the model metering rate (D) to obtain a target metering rate by means of a variable long-term adaptation factor.

4. Method according to any of claims 1 to 3,
   **characterised in that**
   during active level control, a correction is provided for the ammonia level value (F) to obtain an assumed actual level by means of a variable short-term adaptation factor.

5. Method according to claim 3 or 4,
   **characterised in that**
   nitrogen oxide and/or ammonia emission values of the exhaust gas are continuously determined and the nitrogen oxide and/or ammonia emission values are cyclically evaluated for meeting a predetermined short-term adaptation criterion and/or long-term adaptation criterion.

6. Method according to any of claims 3 to 5,
   **characterised in that**
   a value for an ammonia emission on the outlet side of the SCR converter (5) is determined using metrology, and, if this value exceeds a corresponding estimated value determined by the calculation model by a presettable degree, the model metering rate (D) is corrected by multiplication with the long-term adaptation factor in such a way that a target metering rate lower than the model metering rate (D) is obtained.

7. Method according to any of claims 3 to 6,
   **characterised in that**

**EP 2 310 112 B1**

a value for a nitrogen oxide emission on the outlet side of the SCR converter (5) is determined using metrology, and, if this value exceeds a corresponding estimated value determined by the calculation model by a presettable degree, the model metering rate (D) is corrected by multiplication with the long-term adaptation factor in such a way that a target metering rate higher than the model metering rate (D) is obtained.

8. Method according to any of claims 3 to 7,
**characterised in that**
a value for a nitrogen oxide emission on the outlet side of the SCR converter (5) is determined using metrology, and, if this value exceeds a corresponding estimated value determined by the calculation model by a presettable degree, an ammonia level value (F) calculated by the calculation model is corrected by multiplication with the short-term adaptation factor in such a way that an ammonia level value higher than the calculated ammonia level value (F) is obtained, with which the further calculations of the calculation model are performed.

9. Method according to any of claims 6, 7 or 8,
**characterised in that**
an exhaust gas sensor (25) sensitive to both ammonia and nitrogen oxide is used for determining nitrogen oxide and ammonia emission values on the outlet side of the SCR converter (5) using metrology.

**Revendications**

1. Procédé de fonctionnement d'un système de purification de gaz d'échappement comprenant un catalyseur RCS (5) destiné à nettoyer un gaz d'échappement d'un moteur à combustion interne (1) d'un véhicule, selon lequel un réducteur contenant de l'ammoniac est ajouté au gaz d'échappement par une unité de dosage (27) commandée par une unité de commande et un gaz d'échappement enrichi en ammoniac de manière correspondante à l'ajout dosé est amené dans le catalyseur RCS (5), un modèle de calcul calculant

   - une valeur de remplissage (F) d'ammoniac pour un remplissage d'ammoniac stocké dans le catalyseur RCS (5) et
   - un taux de dosage modèle (D) pour l'ajout du réducteur dans le gaz d'échappement selon lequel un remplissage théorique prédéfini par le modèle de calcul de l'ammoniac stocké dans le catalyseur ou une efficacité théorique ($\eta$) prédéfinie par le modèle de calcul sont obtenus approximativement pour un volume d'oxyde d'azote ($U_{NOx}$) au moyen de l'ammoniac stocké dans le catalyseur RCS (5) ou amené dans le catalyseur RCS (5),

   et on effectue soit un réglage de remplissage basé sur le modèle pour atteindre le remplissage théorique soit une commande d'efficacité basée sur le modèle pour atteindre l'efficacité théorique ($\eta$), en cas de réglage de remplissage actif lorsque les valeurs prédéterminées sont dépassées pour

   - une capacité de remplissage réelle déterminée par le modèle de calcul pour une quantité d'ammoniac maximale stockable actuellement dans le catalyseur RCS, et/ou
   - une température de gaz d'échappement ou du catalyseur RCS (5) et/ou
   - un débit massique du gaz d'échappement s'écoulant dans le catalyseur RCS (5), et/ou
   - un débit massique d'oxyde d'azote s'écoulant dans le catalyseur RCS (5), on passe à une commande d'efficacité,

   une efficacité de base (BW) étant déterminée par le modèle de calcul, qui correspond au moins approximativement à une efficacité maximale possible actuelle pour le volume de NOx ($U_{NOx}$) du catalyseur RCS (5) et en cas de commande d'efficacité active une fraction prédéfinie de l'efficacité de base (BW) étant définie comme efficacité théorique (n).

2. Procédé selon la revendication 1, **caractérisé en ce qu'**en cas de réglage de remplissage actif et/ou de commande active d'efficacité une précommande du taux de dosage est effectuée.

3. Procédé selon l'une quelconque des revendications 1 ou 2, **caractérisé en ce qu'**en cas de réglage actif de remplissage et/ou de commande active d'efficacité pour le taux de dosage modèle (D), un taux de dosage théorique est corrigé selon un facteur d'adaptation longue durée modifiable.

4. Procédé selon l'une quelconque des revendications 1 à 3, **caractérisé en ce qu'**en cas de réglage actif de rem-

**14**

plissage pour la valeur de remplissage d'ammoniac (F) une valeur de remplissage réelle présumée est corrigée par un facteur d'adaptation de courte durée modifiable.

**5.** Procédé selon la revendication 3 ou 4, **caractérisé en ce que** les valeurs d'émission d'ammoniac et/ou d'oxyde d'azote du gaz d'échappement sont déterminées en continu et les valeurs d'émission d'ammoniac et/ou d'oxyde d'azote sont évaluées par cycles en fonction qu'un critère d'adaptation de courte durée prédéfini et/ou un critère d'adaptation de longue durée soit satisfait.

**6.** Procédé selon l'une quelconque des revendications 3 à 5, **caractérisé en ce qu'**une valeur pour une émission d'ammoniac côté sortie du catalyseur RCS (5) est déterminée métrologiquement et dans le cas où cette valeur dépasse une valeur évaluée correspondante déterminée par le modèle de calcul selon une quantité prescrite, le taux de dosage modèle (D) est corrigé par multiplication au moyen du facteur d'adaptation de longue durée de manière à obtenir un taux de dosage théorique inférieur au taux de dosage modèle (D).

**7.** Procédé selon l'une quelconque des revendications 3 à 6, **caractérisé en ce qu'**une valeur pour une émission d'oxyde d'azote côté sortie du catalyseur RCS (5) est déterminée métrologiquement et dans le cas où cette valeur est inférieure à une valeur estimée correspondante déterminée par le modèle de calcul selon une quantité prescrite, le taux de dosage modèle (D) est corrigé par multiplication au moyen du facteur d'adaptation de longue durée de manière à obtenir un taux de dosage théorique supérieur au taux de dosage modèle (D).

**8.** Procédé selon l'une quelconque des revendications 3 à 7, **caractérisé en ce qu'**une valeur pour une émission d'oxyde d'azote côté sortie du catalyseur RCS (5) est déterminée métrologiquement et dans le cas où cette valeur soit inférieure à une valeur estimée correspondante déterminée par le modèle de calcul selon une quantité prescrite, une valeur de remplissage d'ammoniac (F) calculée par le modèle de calcul est corrigée par multiplication à l'aide du facteur d'adaptation de courte durée de manière à obtenir une valeur de remplissage d'ammoniac (F) réelle supérieure à la valeur de remplissage d'ammoniac calculée, permettant de réaliser les autres calculs du modèle de calcul.

**9.** Procédé selon l'une quelconque des revendications 6 et 7 ou 8, **caractérisé en ce que** pour déterminer métrologiquement des valeurs d'émission d'ammoniac et d'oxyde d'azote côté sortie du catalyseur RCS (5) on se sert d'un capteur de gaz d'échappement sensible tant à l'ammoniac qu'à l'oxyde d'azote.

**Fig. 1**

**Fig. 2**

**Fig. 3**

**Fig. 4**

**Fig. 5**

**Fig. 6**

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1348477 A1
- EP 0554766 A1
- DE 10347132 A1